# EUROPÄISCHE PATENTANMELDUNG

(11) **EP 4 494 837 A2**
(43) Veröffentlichungstag der Anmeldung: **22.01.2025**
(21) Anmeldenummer: 24189632.3
(22) Anmeldetag: 19.07.2024
(51) Int. Cl.: B29C 49/00, B29C 49/42, B29C 45/76, B29C 49/06, B29C 49/64, B29C 49/02, B29C 49/46, B29C 49/78, B29L 31/00, B67C 3/22, B67C 7/00

(54) **BEHÄLTERBEHANDLUNGSANLAGE ZUM HERSTELLEN VON BEHÄLTERN AUS VORFORMLINGEN**

(30) Priorität: 19.07.2023 DE 102023119051
(71) Anmelder: Krones AG, 93073 Neutraubling (DE)
(72) Erfinder: Kindl, Norbert, 93073 Neutraubling (DE); Nebl, Florian, 93073 Neutraubling (DE); Geltinger, Florian, 93073 Neutraubling (DE); Roth, Andreas, 93073 Neutraubling (DE); Killermann, Christian, 93073 Neutraubling (DE); Wuensche, Dieter, 93073 Neutraubling (DE)
(74) Vertreter: Grünecker Patent- und Rechtsanwälte PartG mbB

(57) **Zusammenfassung**

Behälterbehandlungsanlage (100, 200, 400) zum Herstellen von Behältern aus VorformlingenBehälterbehandlungsanlage zum Herstellen von Behältern aus Vorformlingen, die Behälterbehandlungsanlage (100, 200, 400) **umfassend** eine Herstellungsmaschine (101, 201), insbesondere eine Spritzgussmaschine (301), zum Herstellen von Vorformlingen, eine Heizeinrichtung (102, 201, 202) zum Erwärmen von Vorformlingen, eine Blasformmaschine (103, 203) zum Ausformen von Vorformlingen zu Behältern, eine erste Transporteinrichtung (104, 204) zum Transportieren von Vorformlingen entlang einer ersten Transportrichtung (T1) zu der Heizeinrichtung (102, 201, 202) und eine zweite Transporteinrichtung (105, 204, 205) zum Transportieren erwärmter Vorformlinge (130) von der Heizeinrichtung (102, 201, 202) zu der Blasformmaschine (103, 203), **wobei** die Behälterbehandlungsanlage (100, 200, 400) eine fiktive Grundfläche (140, 240) in Form eines Rechtecks einnimmt und die Herstellungsmaschine (101, 201), die Heizeinrichtung (102, 201, 202) und die Blasformmaschine (103, 203) jeweils eine fiktive Komponentengrundfläche in Form eines Rechtsecks einnehmen, **wobei** eine längste Seite der Grundfläche eine Länge (L4, L5) aufweist, die kleiner ist als die Summe der längsten Seiten der Komponentengrundflächen und der Länge (L4, L5) der ersten und der zweiten Transporteinrichtung (105, 205).

## Beschreibung

Die vorliegende Erfindung betrifft eine Behälterbehandlungsanlage zum Herstellen von Behältern aus Vorformlingen gemäß unabhängigen Anspruch 1 sowie eine Behälterbehandlungsanlage zum Herstellen von Behältern aus Vorformlingen gemäß unabhängigen Anspruch 2.

### Stand der Technik

Behälterbehandlungsanlagen sind aus dem Stand der Technik hinreichend bekannt. Diese umfassen üblicherweise eine Reihe von Maschinen, die hinsichtlich ihres Behälterdurchsatzes miteinander synchronisiert sein können und zwischen denen die Vorformlinge und/oder Behälter mittels einer oder mehrerer Transporteinrichtungen (beispielsweise Linearfördereinrichtungen oder Transportsterne) transportiert werden können. Den Behälterbehandlungsanlagen werden Vorformlinge üblicherweise über Sortiereinrichtungen zugeführt, wobei die Vorformlinge gängigerweise von einem Vorformlinghersteller bezogen werden, so dass diese als "Schüttgut" der Behälterbehandlungsanlage zugeführt und mittels der Sortiereinrichtung in die Behälterbehandlungsanlage eingespeist werden.

Dies erfordert eine räumliche und zeitliche Trennung der Herstellung der Vorformlinge einerseits und der weiteren Verarbeitung der Vorformlinge zu Behältern andererseits. Hiermit gehen Nachteile hinsichtlich einer Verschlechterung der Qualität der Vorformlinge während ihrer Lagerung und eventuell notwendigerweise zu erfüllende Sterilitätsanforderungen der Vorformlinge bzw. der daraus hergestellten Behälter einher, was die weitere Verarbeitung der Vorformlinge verkompliziert.

Andererseits ist es ein Bestreben im Stand der Technik, den Platzbedarf von Behälterbehandlungsanlagen möglichst gering zu halten.

### Aufgabe

Ausgehend vom bekannten Stand der Technik besteht die zu lösende technische Aufgabe somit darin, eine Herstellung von Behältern aus Vorformlingen und deren weitere Verarbeitung möglichst effizient zu gestalten und gleichzeitig den notwendigen Platzbedarf einer Behälterbehandlungsanlage möglichst gering zu halten.

### Lösung

Diese Aufgabe wird durch die Behälterbehandlungsanlage gemäß unabhängigem Anspruch 1 und die Behälterbehandlungsanlage gemäß unabhängigem Anspruch 2 gelöst. Vorteilhafte Weiterbildungen der Erfindung sind in den Unteransprüchen erfasst.

Die erfindungsgemäße Behälterbehandlungsanlage zum Herstellen von Behältern aus Vorformlingen umfasst eine Herstellungsmaschine, insbesondere eine Spritzgussmaschine, zum Herstellen von Vorformlingen, eine Heizeinrichtung zum Erwärmen von Vorformlingen, eine Blasformmaschine zum Ausformen von Vorformlingen zu Behältern, eine erste Transporteinrichtung zum Transportieren von Vorformlingen entlang einer ersten Transportrichtung zu der Heizeinrichtung und eine zweite Transporteinrichtung zum Transportieren erwärmter Vorformlinge von der Heizeinrichtung zu der Blasformmaschine, wobei die Behälterbehandlungsanlage eine fiktive Grundfläche in Form eines Rechtecks einnimmt und die Herstellungsmaschine, die Heizeinrichtung und die Blasformmaschine jeweils eine fiktive Komponentengrundfläche in Form eines Rechtsecks einnehmen, wobei eine längste Seite der Grundfläche eine Länge aufweist, die kleiner ist als die Summe der längsten Seiten der Komponentengrundflächen und der Länge der ersten und der zweiten Transporteinrichtung.

Erfindungsgemäß kann als Herstellungsmaschine jede Maschine verwendet werden, die zum Herstellen von Vorformlingen geeignet ist. Insbesondere kann die Herstellungsmaschine als Spritzgussmaschine ausgestaltet sein oder eine solche umfassen. Aber auch andere Ausführungsformen sind denkbar bei denen die Herstellung der Vorformlinge aus einem festen und/oder teilweise flüssigen bzw. verflüssigten Ausgangsmaterial hergestellt werden. So kann alternativ zu einer Spritzgussmaschine beispielsweise auch eine Compression Moulding Maschine oder Injection Compression Moulding Maschine als Herstellungsmaschine verwendet werden.

Unter der fiktiven Grundfläche ist eine gedachte Grundfläche zu verstehen, die von der Behälterbehandlungsanlage eingenommen wird. Diese gedachte Grundfläche kann beispielsweise das kleinstmögliche Rechteck darstellen, in das die Behälterbehandlungsanlage fiktiv eingebracht werden kann. Entsprechendes gilt für die fiktiven Komponentengrundflächen, die ebenfalls als Rechteck angenommen werden können und bevorzugt so ausgestaltet sind, dass eine der Seiten der Komponentengrundfläche mit einem Auslass bzw. einem Einlauf für Vorformlinge oder Behälter der jeweiligen Maschine (also der Blasformmaschine, der Herstellungsmaschine und der Heizeinrichtung) zusammenfällt bzw. parallel zu dieser verläuft.

Die Transporteinrichtungen können beliebig ausgestaltet sein, können insbesondere Fördereinrichtungen beispielsweise zum hängenden Transport der Behälter entlang einer linearen, optional geradlinigen Strecke und/oder ein oder mehrere Transportsterne umfassen. In diesem Sinne ist als erste bzw. zweite Transportrichtung jeweils die Transportrichtung der Behälter zu verstehen, die tangential an der jeweiligen Transporteinrichtung in einem Punkt der Übergabe der Vorformlinge und/oder Behälter von einer der Maschinen (Blasformmaschine, Herstellungsmaschine oder Heizeinrichtung) an die Transporteinrichtung bzw. von der Transporteinrichtung an eine der jeweiligen Maschinen verläuft.

Die Anordnung der Maschinen der Behälterbehandlungsanlage und der Transporteinrichtungen erlauben eine möglichst platzsparende Konstruktion der Behälterbehandlungsanlage bei gleichzeitig geringem Transportweg der Vorformlinge und/oder Behälter zwischen den einzelnen Maschinen. Hierdurch wird eine platzsparende Integration der Herstellungsmaschine in die Behälterbehandlungsanlage erreicht, womit gleichzeitig die hygienischen Anforderungen an die Herstellung der Behälter einfacher erfüllt werden können.

Eine weitere erfindungsgemäße Behälterbehandlungsanlage zum Herstellen von Behältern aus Vorformlingen umfasst eine Herstellungsmaschine, insbesondere eine Spritzgussmaschine, zum Herstellen von Vorformlingen, eine Heizeinrichtung zum Erwärmen von Vorformlingen, einen Aseptikblock zum aseptischen Herstellen von Behältern aus den Vorformlingen sowie zum aseptischen Befüllen und Verschließen von Behältern, eine erste Transporteinrichtung zum Transportieren von Vorformlingen entlang einer ersten Transportrichtung zu der Heizeinrichtung und eine zweite Transporteinrichtung zum Transportieren erwärmter Vorformlinge von der Heizeinrichtung zu dem Aseptikblock, wobei die Behälterbehandlungsanlage eine fiktive Grundfläche in Form eines Rechtecks einnimmt und die Herstellungsmaschine, die Heizeinrichtung und der Aseptikblock jeweils eine fiktive Komponentengrundfläche in Form eines Rechtsecks einnehmen, wobei eine längste Seite der Grundfläche eine Länge aufweist, die kleiner ist als die Summe der längsten Seiten der Komponentengrundflächen und der Länge der ersten und der zweiten Transporteinrichtung.

Hinsichtlich der fiktiven Komponentengrundfläche und der Grundfläche sowie der Transporteinrichtungen gilt das bereits mit Hinblick auf die vorangegangene Ausführungsform beschriebene. Mit dieser Ausgestaltung der Behälterbehandlungsanlage wird auch eine platzsparende Realisierung einer aseptischen Verarbeitung von Behältern mit integrierter Herstellungsmaschine möglich.

Es kann vorgesehen sein, dass der Aseptikblock einen Aseptikraum und eine darin angeordnete Blasformmaschine zum Ausformen der Vorformlinge zu Behältern, eine stromab der Blasformmaschine angeordnete Füllmaschine zum Füllen der Behälter und einen stromab der Füllmaschine angeordneten Verschließer zum Verschließen der Behälter umfasst.

Der Aseptikraum kann ein Raum sein, in dem bestimmte hygienische oder sonstige physikalische Anforderungen (Luftfeuchtigkeit, Anzahl der Verunreinigungsteilchen in der Luft pro Kubikmeter, Temperatur oder Ähnliches) erreicht werden. Er kann in diesem Sinne eine Art Reinraum darstellen. Durch Anordnung der Blasformmaschine, der Füllmaschine und des Verschließers in dem Aseptikraum wird ein geschlossener Prozess für das Herstellen und Weiterverarbeiten der Behälter bis zum Verschließen realisiert, was hygienische Anforderungen erfüllen kann. Der Aseptikraum bzw. dessen äußere Begrenzung kann, muss jedoch nicht mit der fiktiven Komponentengrundfläche identisch sein.

In einer Ausführungsform ist vorgesehen, dass die kürzeste Seite der Grundfläche eine zweite Länge aufweist, die kleiner ist als die Summe der kürzesten Seiten der Komponentengrundflächen und der Länge der ersten und der zweiten Transporteinrichtung. Die Behälterbehandlungsanlage wird hierdurch kompaktifiziert.

Ein Auslass der Herstellungsmaschine kann mit der ersten Transportrichtung einen Winkel zwischen 0° und 90° oder zwischen 30° und 60° einschließen. Hierdurch wird eine effiziente und platzsparende Anordnung der Herstellungsmaschine und der Transporteinrichtung erreicht. Ein Einlauf der Heizeinrichtung kann mit der ersten Transportrichtung einen Winkel zwischen 0° und 90° oder zwischen 30° und 60° einschließen. Mit dieser Ausführungsform kann eine effiziente, insbesondere platzsparende Anordnung der Herstellungsmaschine und der Heizeinrichtung realisiert werden.

Es kann vorgesehen sein, dass ein Auslass der Heizeinrichtung mit der zweiten Transportrichtung einen Winkel zwischen 0° und 90° oder zwischen 30° und 60° einschließt. Hierdurch wird eine weitere Kompaktifizierung der Heizeinrichtung, der Herstellungsmaschine und der Blasformmaschine bzw. des Aseptikblocks realisiert.

Die Behälterbehandlungsanlage kann weiterhin eine Sortiereinrichtung zum Entnehmen und Ausrichten von Vorformlingen aus einem Vorrat umfassen und die Sortiereinrichtung kann ausgerichtete Vorformlinge einem Auslass der Herstellungsmaschine zuführen, wobei optional eine Transportrichtung der Vorformlinge von der Sortiereinrichtung zu dem Auslass parallel zu einer Transportrichtung von Vorformlingen innerhalb der Herstellungsmaschine zum Auslass sein kann. Sollte die Herstellungsmaschine ausfallen, kann hierdurch auf platzsparende Weise eine alternative Zufuhr von Vorformlingen realisiert werden.

Es kann vorgesehen sein, dass die Sortiereinrichtung auf einem höheren Höhenniveau als die Herstellungsmaschine angeordnet ist und gesehen in einer Richtung senkrecht zur Komponentengrundfläche der Herstellungsmaschine mit der Herstellungsmaschine zumindest teilweise überlappend angeordnet ist. Diese Ausgestaltung kompaktifiziert die Behälterbehandlungsanlage weiter.

Stromauf des Auslasses kann eine Weiche angeordnet sein, mit der ein Zuführen von Vorformlingen von der Herstellungsmaschine oder der Sortiereinrichtung gesteuert werden kann. Hiermit kann flexibel zwischen den verschiedenen Möglichkeiten des Zuführens von Vorformlingen gewechselt werden.

Es kann vorgesehen sein, dass die Herstellungsmaschine eine Inspektionseinrichtung zum Inspizieren von Vorformlingen umfasst. Diese Ausführungsform stellt die Qualität der hergestellten Vorformlinge für die Verwendung in der Blasformmaschine sicher.

Die Herstellungsmaschine kann eine Entnahmeeinrichtung zum Entnehmen von hergestellten Vorformlingen aus einem Werkzeug der Herstellungsmaschine umfassen und die Entnahmeeinrichtung kann die Vorformlinge abhängig von einem Inspektionsergebnis einem Auslass der Herstellungsmaschine oder zur ersten Transporteinrichtung oder einer Aufnahme zuführen.

Mit dieser Ausführungsform können qualitativ nicht ausreichende Vorformlinge aussortiert werden, bevor diese nachgeordneten Einrichtungen der Behälterbehandlungsanlage zugeführt werden.

### Kurze Beschreibung der Figuren

- Fig. 1: zeigt eine beispielhafte Behälterbehandlungsanlage
- Fig. 2: zeigt eine Ausführungsform einer Behälterbehandlungsanlage
- Fig. 3: zeigt eine Ausführungsform einer Herstellungsmaschine und einer Sortiereinrichtung
- Fig. 4: zeigt eine weitere Ausführungsform einer Behälterbehandlungsanlage mit einem Aseptikblock

### Ausführliche Beschreibung

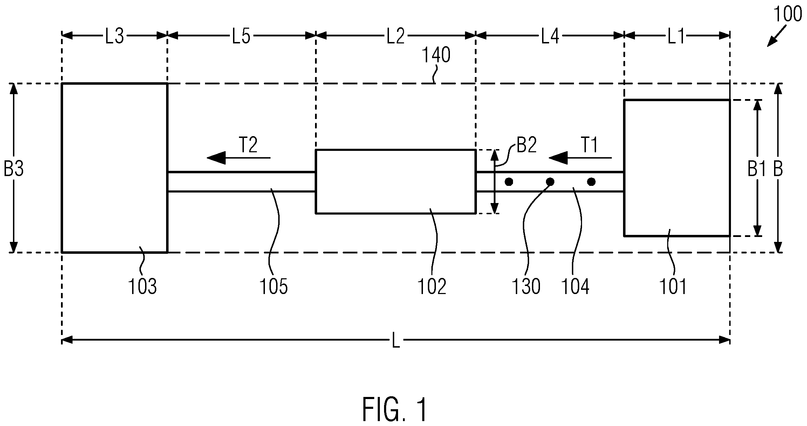

Fig. 1 zeigt beispielhaft eine Behälterbehandlungsanlage 100, die nicht Gegenstand der Erfindung ist. Die Behälterbehandlungsanlage 100 umfasst eine Herstellungsmaschine 101. In dieser können Vorformlinge aus Ausgangsmaterial (beispielsweise Kunststoffpellets) hergestellt werden. Die Herstellungsmaschine kann beispielsweise eine Spritzgussmaschine sein oder diese umfassen. Auch andere Ausführungsformen der Herstellungsmaschine sind jedoch denkbar.

Aus der Herstellungsmaschine werden die Vorformlinge über eine erste Transporteinrichtung 104 entlang einer ersten Transportrichtung T1 einer Heizeinrichtung 102 zugeführt. In dieser Heizeinrichtung 102 werden die Vorformlinge auf eine gewünschte Temperatur für das nachfolgende Ausformen erwärmt und aus der Heizeinrichtung 102 mittels einer Transporteinrichtung 105 entlang der zweiten Transportrichtung T2 zu der Blasformmaschine 103 befördert. In dieser werden sie zu Behältern ausgeformt und können anschließend weiterverarbeitet werden (beispielsweise gefüllt und verschlossen werden).

Die Blasformmaschine 103 kann insbesondere als Rundläufer mit einer Reihe von Blasformen an ihrer Peripherie ausgestaltet sein, in die Vorformlinge aufgenommen und zu einem Behälter (beispielsweise durch Beaufschlagen mit Druckluft und/oder Verstrecken mit einer Reckstange) ausgeformt werden können. Die Heizeinrichtung kann eine lineare Förderstrecke, die auch eine oder mehrere Windungen mit entgegengesetzter Transportrichtung der Vorformlinge umfasst, ausgestaltet sein, und durch Beaufschlagen zumindest eines Teils der Oberfläche der Vorformlinge mit Wärme die Vorformlinge auf eine gewünschte Temperatur erwärmen, um ein anschließendes Ausformen zu ermöglichen.

Der Herstellungsmaschine 101 ist eine fiktive Komponentengrundfläche zugeordnet, die als Rechteck mit dem kleinsten Flächeninhalt, in dem die Herstellungsmaschine vollständig eingepasst werden kann, dargestellt werden kann. Dieses Rechteck weist eine längere Seite L1 und eine kürzere Seite B1 auf, wobei L1 größer oder gleich B1 ist. Für den Fall, dass L1 gleich B1 ist, ist das Rechteck ein Quadrat.

Die erste Transportstrecke 104 hat eine Länge L4, die zumindest teilweise den Abstand zwischen einem Einlass der Herstellungsmaschine 101, von dem die Vorformlinge 130 an die erste Transporteinrichtung 104 übergeben werden, und einem Einlass der Heizeinrichtung 102, in dem die Vorformlinge von der ersten Transporteinrichtung 104 an die Heizeinrichtung 102 übergeben werden, überbrückt. Die Länge L4 kann parallel zur ersten Transportrichtung T1 gemessen sein, muss dies jedoch nicht.

Die Heizeinrichtung umfasst analog zur Herstellungsmaschine 101 eine fiktive Komponentengrundfläche mit einer längeren Seiten L2 und einer kürzeren Seite B2 in Form eines Rechtecks. Die zweite Transporteinrichtung 105 umfasst eine Länge L5 analog zu der Länge L4 und transportiert Behälter in Transportrichtung T2. Die Blasformmaschine 103 umfasst analog zu der bisher beschriebenen Herstellungsmaschine und Heizeinrichtung eine fiktive Komponentengrundfläche mit den Seitenlängen L3 (längere Seite) und B3 (kürzere Seite) in Form eines Rechtecks.

Während in der dargestellten Ansicht die Längen L1, L2, L3 und L4 parallel sind und L1, L2 und L3 dieselbe Ausrichtung aufweisen, ist dies nur beispielhaft zu verstehen.

In der hier gezeigten Anordnung der Komponenten der Behälterbehandlungsanlage 100 ist eine fiktive Grundfläche 140 der gesamten Behälterbehandlungsanlage 100 ebenfalls als Rechteck darstellbar, das bevorzugt das Rechteck mit dem kleinsten Flächeninhalt ist, in das die gesamte Behälterbehandlungsanlage 100 eingepasst werden kann.

Wie zu erkennen, umfasst dieses Rechteck eine längere Seite L und eine kürzere Seite B, wobei L und B auch identisch zueinander sein können (also die fiktive Grundfläche ein Quadrat bildet). Wie in Fig. 1 gezeigt, setzt sich die Länge L aus der Summe der Längen L1 bis L5 zusammen, ist also gleich der Summe der längsten Abmessungen der Herstellungsmaschine, der Heizeinrichtung und der Blasformmaschine und der Längen der ersten Transporteinrichtung 104 und der zweiten Transporteinrichtung 105. Hierdurch ergibt sich ein erheblicher Platzbedarf für die Behälterbehandlungsanlage.

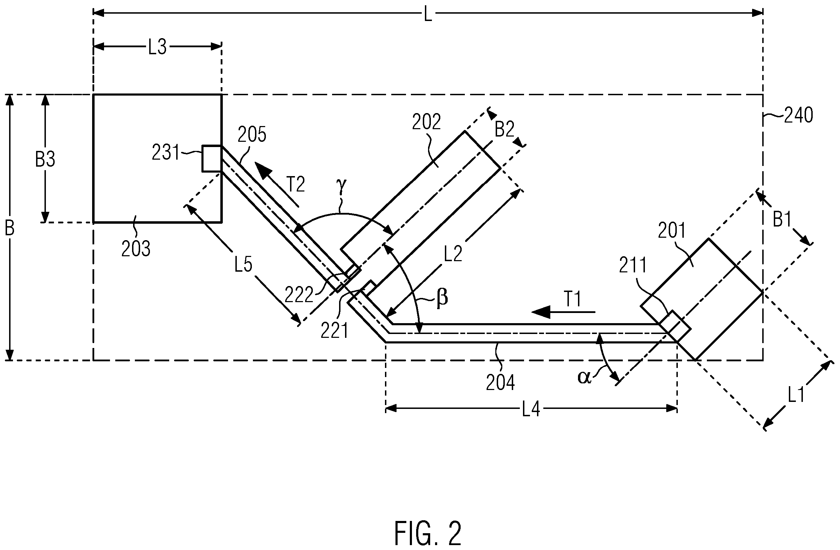

Fig. 2 zeigt eine Ausführungsform einer Behälterbehandlungsanlage 200 gemäß der Erfindung. In dieser Ausführungsform umfasst die Behälterbehandlungsanlage 200 analog zur Fig. 1 eine Herstellungsmaschine 201, eine erste Transporteinrichtung 204, eine Heizeinrichtung 202, eine zweite Transporteinrichtung 205 und eine Blasformmaschine 203, die analog zu den in Fig. 1 beschriebenen Beispielen fiktive Komponentengrundflächen ausweisen, die jeweils als Rechteck mit den entsprechenden Seitenlängen gebildet sind.

Weiterhin umfasst die Behälterbehandlungsanlage 100 eine fiktive Grundfläche 240, die analog zu Fig. 1 als das Rechteck mit dem kleinsten Flächeninhalt darstellbar ist, in das die Behälterbehandlungsanlage mit den jeweiligen fiktiven Komponentengrundflächen eingepasst werden kann. In der Ausführungsform der Fig. 2 sind die erste und zweite Transporteinrichtung 204 und 205 jedoch so mit der Herstellungsmaschine 201, der Heizeinrichtung 202 und der Blasformmaschine 203 verbunden, dass die längere Seite der fiktiven Grundfläche 240 der Behälterbehandlungsanlage 200 eine Länge L aufweist, die kleiner als die Summe der längeren Seiten der Komponentengrundflächen und der Länge der Transporteinrichtungen L4 und L5 ist.

Dies kann durch geeignete Anordnungen der Auslässe 201 aus der Herstellungsmaschine bzw. die Verbindung mit der ersten Transporteinrichtung 204 sowie geeignete Wahl bzw. Anordnung des Einlasses 221 der Heizeinrichtung und des Auslasses 222 der Heizeinrichtung sowie die relative Anordnung der ersten Transporteinrichtung 204 und der zweiten Transporteinrichtung 205 relativ zu dem Einlass 221 und dem Auslass 222 realisiert werden. Insbesondere kann vorgesehen sein, dass ein Auslass der Herstellungsmaschine (insbesondere eine Transportrichtung der Behälter bzw. Vorformlinge von der Herstellungsmaschine in Richtung der ersten Transporteinrichtung oder tangential an dieser Richtung anliegende Gerade) mit der Transportrichtung T1 im Bereich des Auslasses einen Winkel zwischen 0 und 90° einschließt, insbesondere also einen spitzen Winkel einschließt. Die Vorformlinge werden aus der Herstellungsmaschine 201 also nicht in gerader Richtung (beispielsweise parallel zu einer Transportrichtung der Vorformlinge nahe der Herstellungsmaschine 201) weiter transportiert, sondern unter einem Winkel α. Dieser kann bevorzugt zwischen 30° und 60° betragen.

Analog kann ein Winkel zwischen dem Einlass 221 bzw. einer Transportrichtung der Vorformlinge in dem Einlass zu der ersten Transportrichtung T1 (mit β bezeichnet) ebenfalls ein spitzer Winkel sein (bevorzugt zwischen 30° und 60°). Dies ermöglicht eine zumindest teilweise Nebeneinanderanordnung der Herstellungsmaschine 201 und der Heizeinrichtung 202, so dass sich zumindest eine Seitenlänge des von diesen Komponenten eingeschlossenen Rechtecks verkürzt.

Analog kann ein Winkel zwischen der zweiten Transportrichtung T2 der zweiten Transporteinrichtung 205 und dem Auslass 21 der Heizeinrichtung 201 (insbesondere ein Winkel zwischen der Bewegungsrichtung der Vorformlinge im Auslass 222 und der zweiten Transporteinrichtung T2) ein spitzer Winkel zwischen 0 und 90° sein. Bevorzugt können auch hier Winkel zwischen 30° und 60° vorgesehen sein. Dies erlaubt eine kompaktere Anordnung der Heizeinrichtung relativ zu der Blasformmaschine, so dass eine weitere Verkürzung der Ausdehnung der Behälterbehandlungsanlage in zumindest einer Richtung erreicht wird.

Durch eine entsprechende Anordnung kann weiterhin gewährleistet sein, dass die kürzere Seite B der fiktiven Grundfläche weiterhin kleiner als die Summe der kürzeren Seiten der Herstellungsmaschine 201, der Heizeinrichtung 202 und der Blasformmaschine 203 sowie der Länge L4 und L5 der ersten Transporteinrichtung und der zweiten Transporteinrichtung ist.

Die Winkel α, β und γ können paarweise verschieden sein, können jedoch auch identisch sein, beispielsweise alle 30° oder alle 50° betragen. Die Erfindung ist diesbezüglich nicht beschränkt. Bisher wurde die Herstellungsmaschine 201 lediglich allgemein als eine Vorrichtung beschrieben, die die Vorformlinge zur Verfügung stellt.

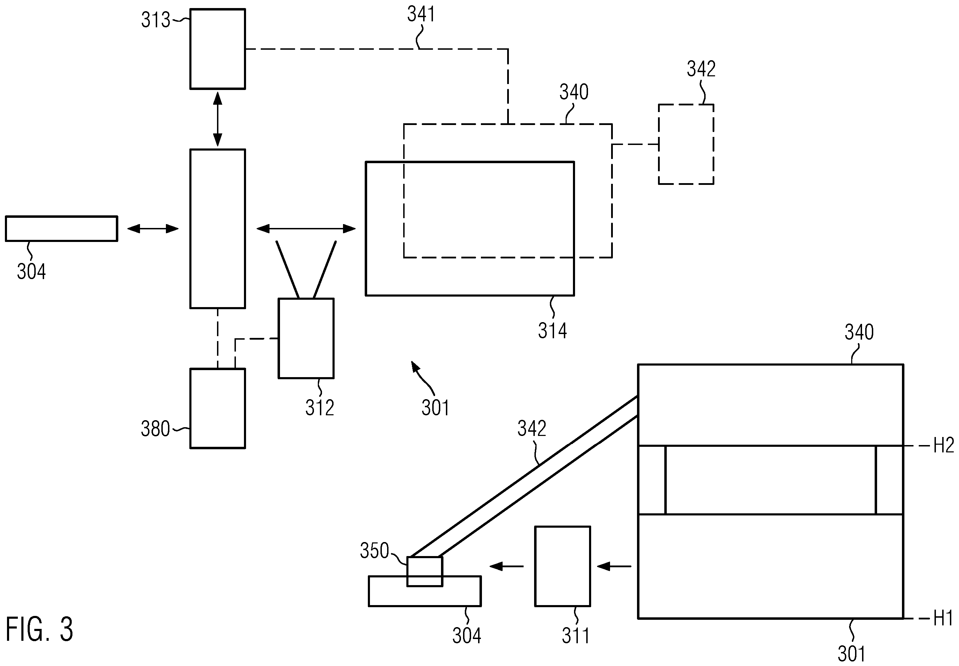

Fig. 3 zeigt eine weitere Ausführungsform der Herstellungsmaschine als Spritzgussmaschine schematisch. Diese Ausführungsform ist mit jeder der bisher beschriebenen und nachfolgend beschriebenen Ausführungsformen derart kombinierbar, dass anstelle der allgemein erwähnten Herstellungsmaschine auch die in Bezug auf Figur 3 beschriebene Spritzgussmaschine eingesetzt bzw. verwendet werden kann.

In der hier gezeigten Ausführungsform umfasst die Spritzgussmaschine ein Werkzeug 314, in dem die Vorformlinge hergestellt werden. Das Werkzeug 314 kann beispielsweise eine Aufnahme mit einer Anzahl von Spritzformen in einem regelmäßigen Muster umfassen, in die erwärmtes und insbesondere flüssiges Vorformlings-Material eingespritzt werden kann, um so Vorformlinge herzustellen. Die Spritzgussmaschine 301 kann weiterhin eine Entnahmeeinrichtung 311 umfassen, die die Vorformlinge aus dem Werkzeug 314 entnehmen und der ersten Transporteinrichtung 304 oder einer innerhalb der Spritzgussmaschine 301 sich erstreckenden Transporteinrichtung zur Transporteinrichtung 304 zuführen kann. Optional kann vorgesehen sein, dass die Spritzgussmaschine 301 weiterhin eine Inspektionseinrichtung 312 umfasst, die Vorformlinge entweder in dem Werkzeug 314 und/oder in der Entnahmeeinrichtung 311 inspizieren kann. Die Inspektionseinrichtung 312 kann beispielsweise als Kamera oder andere optische Erkennungseinrichtung ausgestaltet sein und Bilder von Vorformlingen aufnehmen, die dann beispielsweise an eine Steuereinheit 380 der Spritzgussmaschine 301 (die als Computer mit zugeordnetem Prozessor und/oder Speicher ausgestaltet sein kann) übertragen werden können, in der die Bilder dann ausgewertet werden, um eine Qualität der Vorformlinge bzw. ein Inspektionsergebnis zu bestimmen.

Das Bestimmen des Inspektionsergebnisses kann beispielsweise im Feststellen eines Transmissionsgrads des Materials des Vorformlings bzw. der Vorformlinge bestehen oder dies umfassen. Abhängig von dem Inspektionsergebnis kann dann vorgesehen sein, dass die Steuereinheit der Entnahmeeinrichtung 311 so steuert, dass Vorformlinge, deren Inspektionsergebnis angibt, dass eine weitere Verwendung des Vorformlings beispielsweise zum Ausformen des Vorformlings zu einem Behälter möglich ist, der Transporteinrichtung 304 zugeführt werden und Vorformlinge, deren Inspektionsergebnis angibt, dass die Qualität des Vorformlings für das weitere Verwenden des Vorformlings nicht ausreicht, eine Aufnahme 313 für Vorformlinge zugeführt werden. In dieser Aufnahme können die Vorformlinge entweder vorgehalten werden, um später entsorgt zu werden, oder sie können auch erneut zu Vorformlings-Material verarbeitet werden (beispielsweise durch Zerkleinern) und dem Werkzeug 314 zum Herstellen von Vorformlingen zugeführt werden.

Optional kann die Spritzgussmaschine 301 weiterhin eine Sortiereinrichtung umfassen oder eine Sortiereinrichtung 340 kann der Spritzgussmaschine 301 zugeordnet sein. Die Sortiereinrichtung kann mit einem Vorrat 342 von Vorformlingen und/oder mit der Aufnahme 313 für Vorformlinge verbunden sein (beispielsweise über die Transporteinrichtung 341) und Vorformlinge als Schüttgut empfangen, um diese auszurichten und der Transporteinrichtung 304 bzw. einem Auslass (siehe Fig. 2) der Spritzgussmaschine zuzuführen. Dies kann vorgesehen sein für den Fall, dass die Spritzgussmaschine 301 ausfällt oder aus sonstigen Gründen keine Vorformlinge bereitgestellt werden. Die Steuereinheit 380 kann dann ausgestaltet sein, eine Zufuhr von Vorformlingen über die Sortiereinrichtung zu bewirken.

Besonders bevorzugt kann die Sortiereinrichtung (siehe Fig. 3) auf einem Höhenniveau H2 angeordnet sein, das höher ist als das Höhenniveau H1 der Spritzgussmaschine 301 bzw. zumindest des Werkzeugs 314 liegt, so dass insbesondere die Sortiereinrichtung 340 oberhalb der Spritzgussmaschine 301 angeordnet sein kann. Besonders bevorzugt ist vorgesehen, dass die Sortiereinrichtung gesehen in einer Richtung senkrecht zur Komponentengrundfläche der Spritzgussmaschine 301 mit der Spritzgussmaschine zumindest teilweise überlappt (siehe gestrichelte Anordnung in der linken Darstellung der Fig. 3). Hierdurch wird weiterer Platz eingespart. Eine Transportvorrichtung 342 kann von der Sortiereinrichtung 340 aus ein Zuführen von Vorformlingen (beispielsweise über eine geneigte Ebene und/oder einen Luftförderer) zur ersten Transporteinrichtung 304 realisieren. Dabei kann die Richtung des Transports der Vorformlinge in der Transporteinrichtung 342 zumindest teilweise parallel zu einem Transport der Vorformlinge innerhalb der Spritzgussmaschine von dem Werkzeug 314 zu der Transporteinrichtung 304 und insbesondere innerhalb des Auslasses der Spritzgussmaschine sein.

Um weiteren Platz einzusparen kann vorgesehen sein, dass eine Weiche 350 in der Spritzgussmaschine 301 bzw. einer zur Transporteinrichtung 304 führenden Transporteinrichtung oder in der Transporteinrichtung 304 angeordnet ist, mit der ein Zuführen von Vorformlingen zu der Transporteinrichtung 304 entweder aus der Spritzgussmaschine 301 oder der Sortiereinrichtung 340 über die Transporteinrichtung 342 selektiv gesteuert werden kann. Diese Steuerung kann durch die Steuereinheit 380 realisiert werden und beispielsweise von einem Ausfall der Spritzgussmaschine abhängig sein.

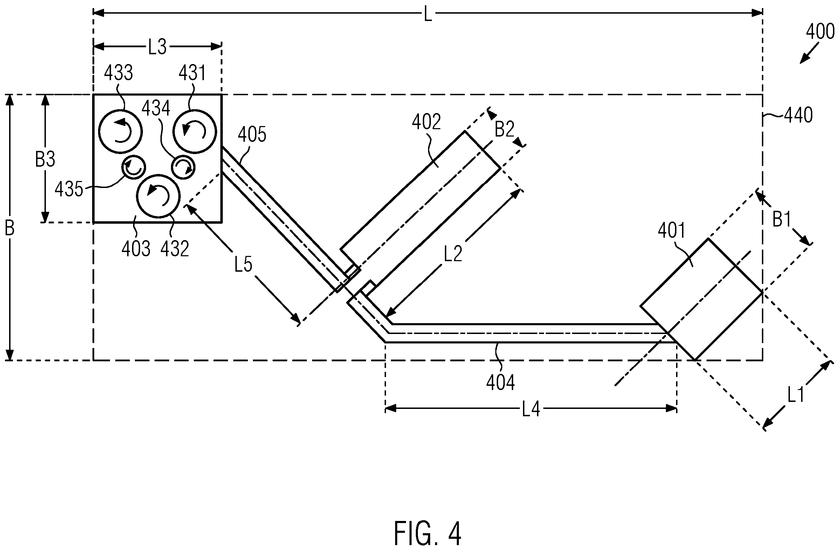

Fig. 4 zeigt eine weitere Ausführungsform einer Behälterbehandlungsanlage. Die in Fig. 4 dargestellte Ausführungsform der Behälterbehandlungsanlage 400 unterscheidet sich von der Ausführungsform der Fig. 2 darin, dass anstelle einer einzelnen Blasformmaschine ein Aseptikblock 403 vorgesehen ist, der eine entsprechende fiktive Komponentengrundfläche mit den Seitenlängen L3 und B3 umfasst. Der Aseptikblock ist hier als eine Blasformmaschine und zumindest eine weitere Maschine, insbesondere einen Füller 432 und optional eine weiteren Maschine, insbesondere eines Verschließers 433 umfassend, gezeigt.

Zwischen diesen Maschinen können Transporteinrichtungen (etwa Drehsterne) 334 und 335 angeordnet sein. Der Aseptikblock 403 kann einen Aseptikraum umfassen, der beispielsweise einen Raum innerhalb des Aseptikraums von der Umgebung vollständig oder teilweise abschließt, so dass insbesondere ein Austausch von Gasen nur oder bevorzugt im Wesentlichen nur durch einen Einlass für Behälter in den Aseptikblock und einen Auslass von Behältern aus dem Aseptikblock möglich ist. Hierdurch können beispielsweise innerhalb des Aseptikraums (durch geeignete Einrichtungen wie Ventilationseinrichtungen und Temperiereinrichtungen) bestimmte Anforderungen hinsichtlich der bei dem Verarbeiten der Behälter (insbesondere Herstellen, Befüllen und Verschließen) notwendigen Bedingungen realisiert werden, wie etwa Luftfeuchtigkeit, Temperatur und Anzahl von Staubpartikeln pro Kubikmeter. Hiermit kann der Einsatz der Behälterbehandlungsanlage auch im Bereich der Lebensmittelindustrie und/oder im Bereich der Medizintechnik realisiert werden, wobei gleichzeitig eine platzsparende Ausgestaltung möglich ist.

Insoweit gelten sämtliche in Bezug auf Fig. 2 und 3 beschriebenen Ausführungsformen mit der weiteren Maßgabe, dass anstelle der Blasformmaschine im Zusammenhang mit den Fig. 2 und 3 der Aseptikblock 403 tritt.

## Patentansprüche

1. Behälterbehandlungsanlage zum Herstellen von Behältern aus Vorformlingen, die Behälterbehandlungsanlage umfassend eine Herstellungsmaschine zum Herstellen von Vorformlingen, insbesondere eine Spritzgussmaschine, eine Heizeinrichtung zum Erwärmen von Vorformlingen, eine Blasformmaschine zum Ausformen von Vorformlingen zu Behältern, eine erste Transporteinrichtung zum Transportieren von Vorformlingen entlang einer ersten Transportrichtung zu der Heizeinrichtung und eine zweite Transporteinrichtung zum Transportieren erwärmter Vorformlinge von der Heizeinrichtung zu der Blasformmaschine, wobei die Behälterbehandlungsanlage eine fiktive Grundfläche in Form eines Rechtecks einnimmt und die Herstellungsmaschine, die Heizeinrichtung und die Blasformmaschine jeweils eine fiktive Komponentengrundfläche in Form eines Rechtsecks einnehmen, wobei eine längste Seite der Grundfläche eine Länge aufweist, die kleiner ist als die Summe der längsten Seiten der Komponentengrundflächen und der Länge der ersten und der zweiten Transporteinrichtung.

2. Behälterbehandlungsanlage zum Herstellen von Behältern aus Vorformlingen, die Behälterbehandlungsanlage umfassend eine Herstellungsmaschine zum Herstellen von Vorformlingen, insbesondere eine Spritzgussmaschine, eine Heizeinrichtung zum Erwärmen von Vorformlingen, einen Aseptikblock zum aseptischen Herstellen von Behältern aus den Vorformlingen sowie zum aseptischen Befüllen und Verschließen von Behältern, eine erste Transporteinrichtung zum Transportieren von Vorformlingen entlang einer ersten Transportrichtung zu der Heizeinrichtung und eine zweite Transporteinrichtung zum Transportieren erwärmter Vorformlinge von der Heizeinrichtung zu dem Aseptikblock, wobei die Behälterbehandlungsanlage eine fiktive Grundfläche in Form eines Rechtecks einnimmt und die Herstellungsmaschine, die Heizeinrichtung und der Aseptikblock jeweils eine fiktive Komponentengrundfläche in Form eines Rechtsecks einnehmen, wobei eine längste Seite der Grundfläche eine Länge aufweist, die kleiner ist als die Summe der längsten Seiten der Komponentengrundflächen und der Länge der ersten und der zweiten Transporteinrichtung.

3. Behälterbehandlungsanlage nach Anspruch 2, wobei der Aseptikblock einen Aseptikraum und eine darin angeordnete Blasformmaschine zum Ausformen der Vorformlinge zu Behältern, eine stromab der Blasformmaschine angeordnete Füllmaschine zum Füllen der Behälter und einen stromab der Füllmaschine angeordneten Verschließer zum Verschließen der Behälter umfasst.

4. Behälterbehandlungsanlage nach einem der Ansprüche 1 bis 3, wobei die kürzeste Seite der Grundfläche eine zweite Länge aufweist, die kleiner ist als die Summe der kürzesten Seiten der Komponentengrundflächen und der Länge der ersten und der zweiten Transporteinrichtung.

5. Behälterbehandlungsanlage nach einem der Ansprüche 1 bis 4, wobei ein Auslass der Herstellungsmaschine mit der ersten Transportrichtung einen Winkel zwischen 0° und 90° oder zwischen 30° und 60° einschließt.

6. Behälterbehandlungsanlage nach einem der Ansprüche 1 bis 5, wobei ein Einlauf der Heizeinrichtung mit der ersten Transportrichtung einen Winkel zwischen 0° und 90° oder zwischen 30° und 60° einschließt.

7. Behälterbehandlungsanlage nach einem der Ansprüche 1 bis 6, wobei ein Auslass der Heizeinrichtung mit der zweiten Transportrichtung einen Winkel zwischen 0° und 90° oder zwischen 30° und 60° einschließt.

8. Behälterbehandlungsanlage nach einem der Ansprüche 1 bis 7, wobei die Behälterbehandlungsanlage weiterhin eine Sortiereinrichtung zum Entnehmen und Ausrichten von Vorformlingen aus einem Vorrat umfasst und wobei die Sortiereinrichtung ausgerichtete Vorformlinge einem Auslass der Herstellungsmaschine zuführen kann, wobei eine Transportrichtung der Vorformlinge von der Sortiereinrichtung zu dem Auslass parallel zu einer Transportrichtung von Vorformlingen innerhalb der Herstellungsmaschine zum Auslass ist.

9. Behälterbehandlungsanlage nach Anspruch 8, wobei die Sortiereinrichtung auf einem höheren Höhenniveau als die Herstellungsmaschine angeordnet ist und gesehen in einer Richtung senkrecht zur Komponentengrundfläche der Herstellungsmaschine mit der Herstellungsmaschine zumindest teilweise überlappend angeordnet ist.

10. Behälterbehandlungsanlage nach Anspruch 8 oder 9, wobei stromauf des Auslasses eine Weiche angeordnet ist, mit der ein Zuführen von Vorformlingen von der Herstellungsmaschine oder der Sortiereinrichtung gesteuert werden kann.

11. Behälterbehandlungsanlage nach einem der Ansprüche 1 bis 10, wobei die Herstellungsmaschine eine Inspektionseinrichtung zum Inspizieren von Vorformlingen umfasst.

12. Behälterbehandlungsanlage nach Anspruch 11, wobei die Herstellungsmaschine eine Entnahmeeinrichtung zum Entnehmen von hergestellten Vorformlingen aus einem Werkzeug der Herstellungsmaschine umfasst und wobei die Entnahmeeinrichtung die Vorformlinge abhängig von einem Inspektionsergebnis einem Auslass der Herstellungsmaschine oder zur ersten Transporteinrichtung oder einer Aufnahme zuführen kann.
